# EUROPÄISCHE PATENTSCHRIFT

(11) **EP 3 432 561 B1**
(45) Veröffentlichungstag und Bekanntmachung des Hinweises auf die Patenterteilung: **02.09.2020**
(21) Anmeldenummer: 18183843.4
(22) Anmeldetag: 17.07.2018
(51) Int. Cl.: H04M 11/06, H04L 12/10, H04B 10/27

(54) **SYSTEM ZUR BEREITSTELLUNG VON VERBINDUNGEN, DIE AUF EINEM DSL-STANDARD BASIEREN UND VERWENDUNG EINES MIKRO-MULTI-SERVICE-ACCESS-MULTIPLEXERS (MIKRO-MSAN)**
SYSTEM FOR PROVIDING CONNECTIONS BASED ON A DSL STANDARD AND USE OF A MICRO-MULTI- SERVICE ACCESS MULTIPLEXER (MICRO MSAN)
SYSTÈME D'OBTENTION DE CONNEXIONS BASÉES SUR UNE NORME DSL ET UTILISATION D'UN MULTIPLEXEUR D'ACCÈS MICRO MULTI-SERVICE (MICRO-MSAN)

(30) Priorität: 20.07.2017 DE 102017116357
(43) Veröffentlichungstag der Anmeldung: 23.01.2019
(73) Patentinhaber: Deutsche Telekom AG, 53113 Bonn (DE)
(72) Erfinder: Heidemann, Cornelius, 64372 Ober-Ramstadt (DE); KASPRZYK, Michael, 53819 Neunkirchen-Seelscheid (DE)
(74) Vertreter: Braun-Dullaeus Pannen Emmerling Patent- & Rechtsanwaltspartnerschaft mbB

(56) Entgegenhaltungen:
- US-A1- 2012 275 784
- US-A1- 2014 072 264
- US-A1- 2015 131 993

## Beschreibung

Die Erfindung betrifft ein System zur Bereitstellung von Verbindungen, die auf einem DSL-Standard basieren und eine Verwendung eines Mikro-Multi-Service-Access-Multiplexers (Mikro-MSAN) in einem solchen System. Hierbei umfasst das System eine Eingangsleitung aus Glasfaser über die optische Signale gesendet werden. Ferner umfasst das System eine Mehrzahl von drahtgebundenen Teilnehmeranschlussleitungen zur Übertragung von elektrischen und optischen Signalen, die jeweils einem Nutzer zugeordnet sind. Ferner weist das System einen Multi-Service-Access-Multiplexer (MSAN) auf, in den einerseits die Eingangsleitung aus Glasfaser und andererseits die Teilnehmeranschlussleitungen einlaufen, wobei der MSAN eine Transformation zwischen den elektrischen und optischen Signalen eines bestimmten DSL-Standards ausführt.

In der Praxis ist bekannt, dass ein Digital-Subscriber-Line-Access-Multiplexer (DSLAM), auch als Multi-Service-Access-Multiplexer (MSAN) bezeichnet, ein Teil der für den Betrieb von DSL benötigten Infrastruktur darstellt. MSANs stehen typischerweise an einem Ort an dem Teilnehmeranschlussleitungen, die zumeist aus Kupferdoppeladern ausgebildet sind, zusammenlaufen. Dieser Ort kann in einer Vermittlungsstelle oder nahe am Anschluss des Kunden sein. Der MSAN weist hierbei unter anderem folgende Funktionen auf: Terminieren der DSL-Verbindung bzw. Kupferdoppeladern mehrerer kundenseitiger Modems und Aggregieren der einzelnen Verbindungen und gebündelter Weitertransport über eine Glasfaseranschlussleitung in Richtung Netzmitte.

MSANs zeichnen sich typischerweise dadurch aus, dass sie jeweils eine bestimmte DSL-Technik anbieten und eine möglichst große Anzahl von Anschlüssen gleichzeitig bündeln. Die Teilnehmeranschlussleitungen werden als gebündeltes Hauptkabel mit vielen Teilnehmeranschlussleitungen geführt und verzweigen über sogenannte Schaltverteiler in Kabelverzweigergehäusen bis hin zu den einzelnen Anschlüssen der Nutzer (Teilnehmeranschluss). Herkömmlich sind die Schaltverteiler also zwischen dem Kunden und dem MSAN angeordnet. Eine andere Bezeichnung für die Schaltverteiler ist das Koppelfeld. Durch den MSAN wird ein optisches Signal (netzseitig) in den Glasfasern in ein elektromagnetisches Signal (kundenseitig) für die Kupferdoppeladern umgewandelt.

Schaltverteiler sind ebenfalls ein Teil für den Betrieb von DSL-Anschlüssen. Schaltverteiler stehen nahe am Anschluss zum Nutzer und weisen ein Kunststoffgestell auf, bei dem die vom Kunden kommende Kupferleitung (Teilnehmeranschlussleitungen) im Schaltverteiler mittels einer kreuzförmigen Matrix jeweils auf einem Schaltpunkt zu den Hauptkabeln verschaltet und weitergeführt wird. Hierbei sind die Schaltpunkte so ausgeführt, dass Module aufsteckbar sind - jedoch wird diese Funktionalität bisher nicht genutzt. Der Schaltverteiler ermöglicht somit Kupferdoppeladern von Teilnehmeranschlussleitungen zu verbinden bzw. zu trennen und in Richtung Netzmitte weiterzuführen. Um den Nutzern einen DSL-Standard bereitstellen zu können, werden sogenannte Linecards in dem MSAN verwendet. Jeder dieser Linecards unterstützt allerdings nur einen bestimmten DSL-Standard.

Ferner ist aus der Praxis die Technik der Fernspeisung bekannt, die genutzt wird bzw. genutzt wurde, um beispielsweise analoge Telefone direkt am Anschluss mit Energie zu versorgen. Für heutige DSL-basierte Zugänge wird die Fernspeisung nicht mehr verwendet.

Bei diesen heute gebräuchlichen Systemen ist es nachteilig, dass aufgrund von räumlichen Beschränkungen in den Vermittlungsstellen und in sogenannten Multifunktionsgehäusen nur eine beschränkte Anzahl von Linecards Verwendung finden. Die hierdurch erzeugte Konzentration möglichst vieler Anschlüsse auf einer Karte verhindert ein flexibles Umschalten auf einen anderen DSL-Standard für einzelne Kunden, da eine bestimmte Linecard nur einen bestimmten DSL-Standard unterstützt. Es folgt hieraus, dass allen Nutzer, die einer bestimmten Linecard zugeordnet sind nur ein einheitlicher DSL-Standard bereitgestellt werden kann. Ein flexibles Umschalten auf einen anderen DSL-Standard für einen einzelnen Nutzer ist nicht möglich. Da bei den in der Praxis bekannten MSANs viele Teilnehmeranschlussleitungen zusammenlaufen, ist der Stromverbrauch eines herkömmlichen MSANs zu groß, als dass eine Fernspeisung möglich wäre.

Ein weiterer Nachteil herkömmlicher MSANs ist, dass für diese, aufgrund von baulichen Beschränkungen, oft ein unerwünscht großer Abstand zwischen dem MSAN und dem Nutzer folgt. Somit ist also eine Teilnehmeranschlussleitung zu lang, um für den Nutzer beispielsweise die VDSL-Technik in maximaler Qualität und Bandbreite anbieten zu können.

Bei den im Gebrauch befindlichen Systemen ist es zudem schwierig "planerisch" die richtige Dimensionierung des Systems für die zu erwartende Kundenmenge zu treffen. Meist fällt das System entweder zu klein oder zu groß aus. Dokument US 2012/275748 A1 beschreibt ein steckbares passives optisches Netzwerk-Sender/Empfängermodul.

Es ist somit die Aufgabe der vorliegenden Erfindung ein System und eine Vorrichtung bereit zu stellen, die es ermöglichen für Nutzer von DSL-Verbindungen flexibel und ohne größere Umbaumaßnahmen einen DSL-Standard ihrer Wahl zur Verfügung zu stellen.

Diese Aufgabe wird gelöst durch ein System mit den Merkmalen des Anspruchs 1 und eine Verwendung eines Mikro-MSANs mit den Merkmalen des Anspruchs 6.

Demnach ist es ein wesentlicher Grundgedanke der Erfindung, dass das System einen Splitter aufweist, der die Eingangsleitungen aus Glasfaser in eine Mehrzahl gesplitterter-Eingangsfasern aufteilt, wobei jeweils ein für einen bestimmten DSL-Standard vorgesehener individueller Mikro-MSAN zwischen eine einzelne gesplittete-Eingangsfaser und eine einzelne Teilnehmeranschlussleitung geschaltet ist, wobei der Mikro-MSAN einen Mikrocontroller aufweist, der eine Konvertierung zwischen den elektrischen und den optischen Signalen bewerkstelligt. Dadurch, dass ein herkömmlicher MSAN, in dem viele Teilnehmeranschlussleitungen zusammen laufen, durch eine Anzahl von Mikro-MSANs ersetzt wird, die der Anzahl der Teilnehmeranschlussleitungen entspricht, wird eine volle Flexibilität des Systems bereitgestellt und die Nutzer mit einer Vielzahl von Techniken (VDSL, SDSL, WDSL, ...) versorgt. Die Aggregation der abgehenden optischen Leistung in Richtung Netzmitte von den einzelnen Mikro-MSANs aus erfolgt in einem einfachen optischen Konzentrator bzw. Splitter am Schaltverteiler. Die Erfindung ermöglicht es vorteilhaft, eine Umschaltung und Migration auf neuere Techniken zu vereinfachen. Dadurch dass die Umschaltung nur ausschließlich anschlussbezogen durchgeführt wird, werden benachbarte Teilnehmeranschlüsse nicht beeinflusst. Durch die sehr kompakte Bauweise des Mikro-MSANs kann dieser zudem flexibel in einer geringen räumlichen Entfernung zum Kunden in ein bestehendes System eingebracht werden, was für eine hohe Bandbreite vorteilhaft ist.

Vorzugsweise weist dieses bestehende System ein Koppelfeld auf, wobei in eine Seite des Koppelfeldes die Teilnehmeranschlussleitungen einlaufen und auf der anderen Seite des Koppelfeldes ein Schaltpunkt ausgebildet ist, der eine Kontaktfläche zu den Teilnehmeranschlussleitungen bereitstellt. Das Koppelfeld ermöglicht hierbei, dass eine netzseitige Glasfaser verschiedenen Teilnehmeranschlussleitungen der Nutzer zugeordnet wird und führt hierbei eine Transformation der optischen Signale in elektrische Signale durch. Im Prinzip benötigt der Mikro-MSAN zur Funktionalität kein Koppelfeld, sondern lediglich die Eingangsleitung und die Teilnehmeranschlussleitung und einen entsprechenden Mikrocontroller zur Transformation der Signale. Das Koppelfeld stellt eine Möglichkeit dar, die Teilnehmeranschlussleitungen von verschiedenen Nutzern zu aggregieren. Insbesondere bei den Kabelverzweigern, die aktuell noch im Bestand und im Einsatz sind, werden Koppelfelder verwendet.

In einer vorteilhaften Ausgestaltung der Erfindung ist der Mikro-MSAN in einen Schaltpunkt einsteckbar, besonders bevorzugt in dem vom Nutzer aus nächstgelegenen Schaltpunkt einsteckbar. Das Einstecken ermöglicht, bestehende Schaltverteiler ohne Umbaumaßnahmen und separate Stromversorgung zu verwenden. Dadurch, dass der Schaltpunkt die Kontaktflächen zu den Teilnehmeranschlussleitungen bereitstellt, ist eine Weiterleitung der Signale über entsprechende Schnittstellen möglich. Diese Schnittstellen sind in den Mikro-MSAN eingearbeitet.

Zweckmäßigerweise ist auf benachbarte Schaltpunkte jeweils einer der Mikro-MSANs aufsteckbar, wobei die Mikro-MSANs hierzu so kompakt gebaut sind, dass sich deren Raumvolumen nicht überschneidet. Dies ermöglicht, dass jeder Teilnehmeranschlussleitung ein ihr zugeordneter Mikro-MSAN bereitgestellt werden kann, sodass jede Teilnehmeranschlussleitungen unabhängig von anderen Teilnehmeranschlussleitungen mit einem frei wählbaren DSL-Standard versorgt werden kann.

Bevorzugt sind mehrere direkt nebeneinanderliegende Schaltpunkte zum gleichen Teilnehmeranschluss durch einen Bündelungs-Mikro-MSAN bedien- und bündelbar. Hinter einer Koppelung mehrere Anschlüsse steht die Technik der Kupferdoppeladerbündelung (DSL-Bonding). Es werden herkömmlich mehrere Anschlüsse zum Kunden zu einer logischen Leitung, beispielsweise Breitbandbündelung 2*100 Mbit/s VDSL = 200 Mbit/s Bonding-DSL, zusammengeführt. Voraussetzung ist, dass zum Kunden auch mehrere Kupferdoppeladern ins Haus führen. Ein Modem kann mehrere Kupferdoppeladern parallel steuern und in der Vermittlungsstelle ist eine entsprechende Bündelungskarte einzusetzen. Allerdings ist der Platz in Multifunktionsgehäusen limitiert, weswegen solche Bündelungskarten zumeist nur in Vermittlungsstellen eingesetzt werden. Hierdurch verlängert sich aber auch der Weg der Kupferdoppeladern zum Nutzer, weshalb man teilweise sogenannte Zwischenregeneratoren einsetzen muss, die das Signal aufbereiten (Dämpfung bei lange Leitung). Auch diesbezüglich erweist sich die Verwendung des Mikro-MSANs in dem System als vorteilhaft, da die Bündelung von der Vermittlungsstelle in das Multifunktionsgehäuse oder das Koppelfeld im Kabelverzweigergehäuse verlagerbar ist, wodurch eine kürzere Entfernung zum Teilnehmeranschluss folgt. Es können durch dafür speziell kombinierbare Bündelung-Mikro-MSANs 4, 8, 16 oder noch mehr Leitungen kombiniert werden. Dies wird dann auch auf dem Koppelfeld gemacht. Aufgrund der Nähe zum Teilnehmeranschluss entfallen dann auch die Zwischenregeneratoren.

Gemäß einem weiteren Aspekt der Erfindung ist ein Mikro-MSAN zur Verwendung in dem vorstehend beschriebenen erfindungsgemäßen System angegeben, wobei der Mikro-MSAN eine erste Schnittstelle zur Kopplung mit einer einzelnen gesplitteten-Eingangsfaser und eine zweite Schnittstelle zur Kopplung mit einer einzelnen Teilnehmeranschlussleitungen, und einen Mikrocontroller, der eine Konvertierung zwischen den elektrischen und/oder den optischen Signalen bewerkstelligt, aufweist. Dieser Aufbau des Mikro-MSAN gewährleistet, dass der MSAN mit dem vorstehend beschriebenen erfindungsgemäßen System technisch kompatibel ist und einfach eingebaut werden kann und jedem Nutzer einen frei wählbaren DSL-Standard bereitstellt.

In einer vorteilhaften Ausgestaltung der Erfindung ist eine der Schnittstellen als ein Stecker ausgebildet, der unmittelbar auf einen Schaltpunkt eines Koppelfeldes einsteckbar ist. Dies ermöglicht, dass das bestehende System schnell und flexibel umgebaut werden kann.

Bevorzugt wird der Mikrocontroller unter anderem zur elektrischen Fernspeisung des Mikro-MSANs verwendet. Zwar ist die Summe der Energie, die die einzelnen Mikro-MSANs verbrauchen ähnlich hoch wie die eines herkömmlichen MSANs, jedoch können die Mikro-MSANs aufgrund der geringen Energie die ein einzelner Mikro-MSAN benötigt jeweils einzeln mittels Fernspeisung betrieben werden. Dahinter steckt auch die Idee, die sogenannten Kabelverzweigergehäuse nutzen zu können. Die heutigen Kabelverzweigergehäuse haben keinen ausreichenden Platz für einen MSAN und einem Netzteil für die Stromversorgung. Es müsste demnach ein neues Gehäuse aufgebaut werden. Dies bedeutet jedoch nachteilig eine neue Baugenehmigung und höhere Kosten für den Komplettumbau. Die Stromversorgung per Fernspeisung und der geringe Platz und der bedarfsgetriebene Aufbau sowie die Dezentralisierung der Energiedichte sind ein weiterer Vorteil des Mikro-MSAN, der also auch in Kabelverzweigergehäusen genutzt werden kann.

Vorzugsweise weist der Mikro-MSAN ein Identifikationsmittel bzw. ein Sicherungsmittel auf, welches Signale über die Eingangsleitung austauscht. Besonders bevorzugt weist das Gehäuse des Mikro-MSANs hierzu einen Barcode, einen QR-Code oder ein anderes Erkennungsmerkmal auf, sodass eine Geräte-ID festgestellt bzw. zugeordnet werden kann. Ein Techniker, welcher den Mikro-MSAN eingebaut hat, kann nun für die Dokumentation das Identifikationsmittel einscannen und in einer Applikation, beispielsweise in seinem mobilen Endgerät, den verbauten Ort bzw. eine eindeutige Leistungskennung des Mikro-MSAN dokumentieren. Besonders bevorzugt weist diese Applikation einen Fernzugriff und ein zentrales Inventar auf und hinterlegt zur Geräte-ID den Einbauort. Eine vollautomatische Inbetriebnahme des Mikro-MSAN erfolgt durch auftrennen der Leitungen und einstecken des Mikro-MSANs an eine Kupfer und/oder einer Glasfaser. Durch die Stromversorgung fährt der Mikro-MSAN hoch und meldet sich automatisch am Netzmanagement und dem zentralen Inventar mit seiner Geräte-ID an. Mittels des Identifikationsmittels autorisiert sich der Mikro-MSAN eindeutig. Durch logische Verknüpfung im Inventar von Einbauort, Geräte-ID und dem Netzmanagement ist der Mikro-MSAN automatisch im Inventar aufgenommen. Aus der IT werden im nächsten Schritt automatisch über die netzseitige Eingangsleitung passende Konfigurationsdaten über eine autorisierte Verbindung zum Mikro-MSAN gesendet. Hiernach ist der Mikro-MSAN einsatzbereit.

Bevorzugt wird der Mikro-MSAN in einem Multifunktionsgehäuse und/oder einem Kabelverzweigergehäuse verwendet. Vorteilhaft wird hierbei die schon vorhandene Infrastruktur wiederverwendet und mittels des Mikro-MSANs flexibel für verschiedene DSL-Standards kostenoptimiert.

Weitere Vorteile, Eigenschaften und Weiterbildungen der Erfindung ergeben sich aus den abhängigen Ansprüchen sowie aus der nachstehenden Beschreibung bevorzugte Ausführungsbeispiele.

Die Erfindung wird nachstehend unter Bezugnahme auf die anliegenden Zeichnungen anhand bevorzugter Ausführungsbeispiele näher erläutert.
- Fig. 1:: zeigt ein beispielhaftes System, welches zurzeit zur Bereitstellung von DSL-Verbindungen für einen Nutzer verwendet wird.
- Fig. 2:: zeigt ein erstes Ausführungsbeispiel des erfindungsgemäßen Systems zur Bereitstellung von verschiedenen DSL-Standards für mehrere Nutzer.
- Fig. 3:: zeigt ein zweites Ausführungsbeispiel des erfindungsgemäßen Systems aus Fig. 2.
- Fig. 4:: zeigt ein drittes Ausführungsbeispiel des erfindungsgemäßen Systems aus Fig. 2.
- Fig. 5:: zeigt ein erstes Ausführungsbeispiel des Mikro-MSANs.
- Fig. 6:: zeigt ein zweites Ausführungsbeispiel des Mikro-MSANs aus Fig. 5.

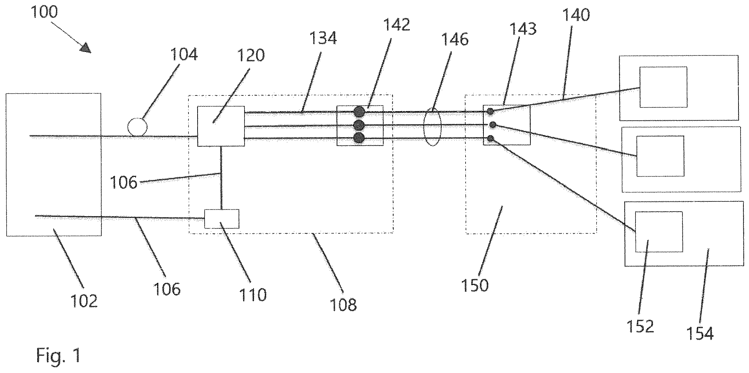

Fig. 1 zeigt die heutige Ausgangslage eines Systems 100 zur Bereitstellung einer DSL-Verbindung für mehrere Nutzer. Von einer Vermittlungsstelle 102 gehen sowohl eine Eingangsleitung aus Glasfaser 104 als auch ein Stromkabel 106 ab und laufen in ein Multifunktionsgehäuse 108 ein. Das Stromkabel 106 wird zunächst in ein Netzteil 110 geführt und versorgt anschließend einen MSAN 120, welcher in dem Multifunktionsgehäuse 108 eingebracht ist, mit Strom. Die Eingangsleitung aus Glasfaser 104 läuft direkt in den MSAN 120 ein. Der MSAN 120 unterstützt nur einen DSL-Standard pro Linecard. Der MSAN 120 kann diese allerdings für mehrere Teilnehmeranschlussleitungen 140 zur Verfügung stellen. Heutige Multifunktionsgehäuse 108 sind in Deutschland für VDSL entwickelt und optimiert worden. Der MSAN 120 wird in "Großbauweise" ausgeführt. Er umfasst ein VDSL Modem und einen Aggregator. Eine Linecard bedient gewöhnlich bis zu 72 Anschlüsse. Diese Anschlüsse werden zentral gemanagt. Der MSAN 120 führt zudem, mittels der Linecards, eine Konvertierung zwischen den elektrischen und den optischen Signalen nach einem bestimmten DSL-Standard durch, sodass in den MSAN 120 einerseits die Eingangsleitung aus Glasfaser 104 einläuft andererseits mehrere Kupferdoppeladern 134 auslaufen.

Die Kupferdoppeladern 134 werden in ein erstes Koppelfeld 142 geführt, wo sie Schaltpunkte durchlaufen und als Kupferkabelbündel 146 in Kabelverzweiger 150 einlaufen, wobei die Kabelverzweiger 150 möglichst nahe am Nutzer aufgestellt sind. In dem Kabelverzweiger 150 läuft das Kupferkabelbündel 146 in ein zweites Koppelfeld 143 ein, wobei aus dem zweiten Koppelfeld 143 die Teilnehmeranschlussleitungen 140 aus den entsprechenden Schaltpunkten auslaufen. Die Teilnehmeranschlussleitungen 140 stehen mit einem Modem 152 des Teilnehmeranschlusses 154 in Verbindung. Aufgrund der vorhandenen Infrastruktur wird zumeist, wie vorstehend beschrieben, eine Kombination aus Glasfaserleitungen und Kupferdoppeladern verwendet. Jedoch ist es auch möglich, die DSL-Verbindung ausschließlich mit Glasfaserleitungen oder Kupferleitungen bereitzustellen.

Das in Fig. 1 beschriebene System 100 verkompliziert neue Technikeinführungen, sodass mehreren Nutzern nur sehr umständlich verschiedene DSL-Standards zur Verfügung gestellt werden können.

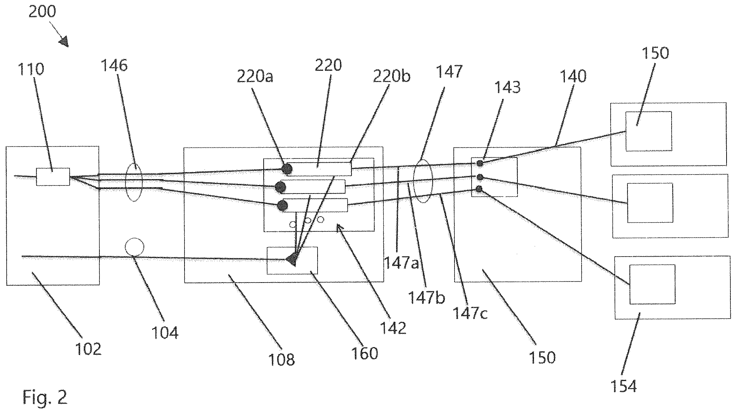

Eine entsprechende Flexibilität wird durch das erfindungsgemäße System 200 in Fig. 2 bereitgestellt:
Fig. 2 liegt die Idee zugrunde, dass der MSAN 120 zu einem Mikro-MSAN 220 miniaturisiert wird und dadurch auf einen Schaltpunkt des ersten Koppelfeldes 142 aufgebracht bzw. eingesteckt werden kann, wobei eine erste Schnittstelle 220a zur Kopplung mit einer einzelnen gesplitteten-Eingangsfasern 104 und eine zweite Schnittstelle 220b zur Kopplung mit einer einzelnen Teilnehmeranschlussleitung 147a, b, c vorgesehen ist. Dadurch, dass ein einzelner Mikro-MSAN 220 deutlich weniger Strom benötigen als der MSAN 120 ist eine elektrische Fernspeisung möglich, sodass das Netzteil 110 von dem Multifunktionsgehäuse 108 in die Vermittlungsstelle 102 verlagert werden kann. Von dem Netzteil 110 läuft ein Kupferkabelbündel 146 in das Multifunktionsgehäuse 108 und versorgt die Mikro-MSANs 220 mit Strom. Die Glasfaserleitung 104 läuft von der Vermittlungsstelle 102 in das Multifunktionsgehäuse 108 ein und dort in einen sogenannten Splitter 160, welcher als Optischer-Koppler dient. Als Splitter 160 kann ein GPON Splitter Verstärker zur optischen Verstärkung verwendet werden, dessen Energie ebenfalls per Fernspeisung bereitgestellt werden kann. Dieser ist ein passiver Aggregator, der die Glasfaserleitung 104 in mehrere Glasfaserleitungen 104 aufteilt, welche in das erste Koppelfeld 142 einlaufen. Die Mikro-MSANs 220 sind auf die Schaltpunkte des Koppelfeldes 142 eingebracht, wodurch die Verbindung mittels der ersten Schnittstelle 220a hergestellt wird.

In dem ersten Koppelfeld 142 laufen die mehreren Glasfaserleitungen 104 jeweils in einen Mikro-MSAN 220 ein, die jeweils auf einen Schaltpunkt des ersten Koppelfeldes 142 aufgesteckt sind. Die Mikro-MSANs 220 werden also per Fernspeisung mittels einer weiteren Schnittstelle aus der Vermittlungsstelle 102 mit Strom versorgt und jeweils über die Glasfaserleitungen 104 gemanagt. Die Mikro-MSANs 220 sind individuell abschaltbar und migrierbar und erlauben eine flexible Technikentwicklung beispielsweise zu ADSL, VDSL oder G.Fast. Jeder Mikro-MSAN 220 kann also jeweils einen anderen DSL-Standard zur Verfügung stellen, sodass den Nutzern jeweils unterschiedliche DSL-Standards bereitgestellt werden können, ohne dass hierzu größere Umbaumaßnahmen notwendig sind. Für das Ausführungsbeispiel in Fig. 2 könnte dies bedeuten, dass mittels jeweils einer Leitung des Kupferkabelbündels 147 ein VDSL-Standard 147a, ein ADSL-Standard 147b und ein SDSL-Standard 147c bereitgestellt wird. Analog zu Fig. 1 läuft das Kupferkabelbündel 146 in den Kabelverzweiger 150 ein und wird mittels der Teilnehmeranschlussleitungen 140 zu den Nutzern geführt. Ein Technikmigration kann also anschlussbezogen einzeln durchgeführt werden. Der Einsatz neuer Techniken muss nicht in beispielsweise 72-er Stufen erfolgen, welche durch die Linecards vorgegeben sind.

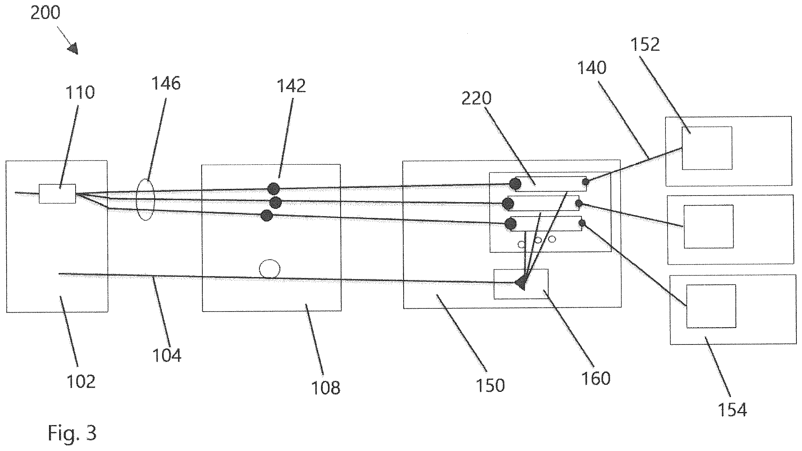

Im Unterschied zu Fig. 2 wird in dem zweiten Ausführungsbeispiel des erfindungsgemäßen Systems 200 in Fig. 3 die aktive Technik der Mikro-MSANs 220 in den Kabelverzweiger 150 verlagert. Hierzu wird die Stromversorgung, welche ebenfalls wieder von der Vermittlungsstelle 102 von einem Netzteil 110 ausgeht in dem ersten Koppelfeld 142 in dem Multifunktionsgehäuse 108 so in einzelne stromführende Kupferkabel aufgeteilt, dass jeder der Mikro-MSANs 220, die in den Kabelverzweiger 150 eingebracht sind, per Fernspeisung mit elektrischen Strom versorgt wird. Die Glasfaserleitung 104, die von der Vermittlungsstelle 102 ausgeht wird ebenfalls lediglich passiv durch das Multifunktionsgehäuse 108 geführt und läuft in dem Kabelverzweiger 150 in den Splitter 160 ein. Der Splitter 160 teilt die Glasfaserleitung 104 analog zu Fig. 2 in mehrere Glasfaserleitungen 104 auf, welche anschließend in die Mikro-MSANs 220 einlaufen, wobei die Mikro-MSANs 220 wie vorstehend beschrieben jeweils einen bestimmten und prinzipiell frei wählbaren DSL-Standard bereitstellen. Von den Mikro-MSANs 220 gehen Teilnehmeranschlussleitungen 140 ab, welche entweder Kupferdoppeladern-Leitungen oder Glasfaser-Leitungen sind, und die jeweiligen Teilnehmeranschlussleitungen 154 mit dem entsprechenden DSL-Standard versorgen. Wird die aktive Technik, wie in Fig. 3 gezeigt, in den Kabelverzweiger 150 verlagert entfallen Abstimmungen von Baumaßnahmen mit Gemeinden. Zudem ist eine Reichweitenerhöhung, insbesondere für abgesetzte Standorte, möglich.

Der Kabelverzweiger 150 ist herkömmlich nur mit Kupferdoppeladern von der Vermittlungsstelle 102 versorgt. Diese Kupferdoppeladern liegen in einem Hauptkabel. Das Hauptkabel verfügt über ein Luftröhrchen. Dabei wird die zu verlegende Glasfaserleitung 104 mittels einer herkömmlichen Einblasvorrichtung in das Luftröhrchen im Kupfer-Hauptkabel eingeblasen. Der Vorteil: Statt die Straße komplett aufzugraben, können die Glasfaserleitungen 104 derzeit auf rund 100 Meter Länge innerhalb weniger Minuten durch die Kupferkabel geblasen werden. Das geht nicht nur schneller, sondern ist auch deutlich günstiger. Das Verfahren wird bisher nur genutzt, um neue Multifunktionsgehäuse 108 zu erreichen. Mit dem Mikro-MSAN 220 und dem Verfahren des Einblasens soll erreicht werden, dass die Kabelverzweiger 150 erweitert werden können (Kombination aus zwei Innovationen zu einem Gesamtansatz). Eine Stromversorgung durch Fernspeisung ist ebenfalls analog zu Fig. 2 möglich. Das erfindungsgemäße System 200 ermöglicht es also, die Mikro-SANs 220 in der Nähe des Teilnehmeranschlusses 154 einzusetzen, sodass aufgrund der kürzeren Teilnehmeranschlussleitungen 140 höhere Bandbreiten erzielbar sind. Die Mikro-MSANs 220 können direkt auf dem Schaltpunkt eingesetzt werden.

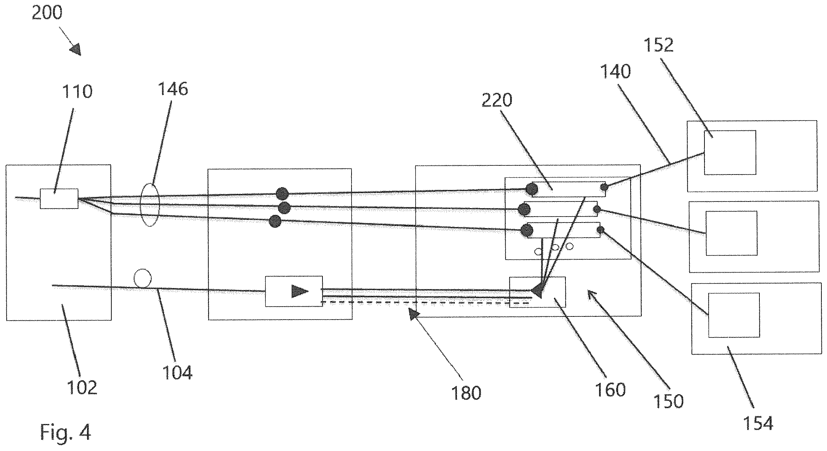

Alternativ wird der Uplink nicht durch eine Glasfaserleitung sondern durch eine kupferbasierende Technik beispielsweise VDSL-Bonding mit oder ohne (Super)-Vectoring 180 durchgeführt. Dieser Fall ist in dem dritten Ausführungsbeispiel der Erfindung in Fig. 4 gezeigt, wo im Unterschied zu Fig. 3 die Glasfaserleitung 104 in das Multifunktionsgehäuse 108 einläuft, wobei der Kupfer-Uplink, gegebenfalls Bonding 180, zu dem Splitter 160 durchgeführt wird, welcher analog zu Fig. 3 im Kabelverzweiger 150 angeordnet ist.

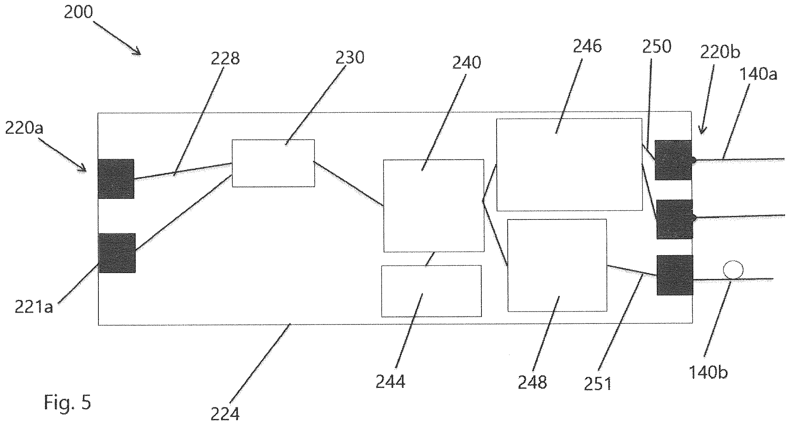

Fig. 5 zeigt ein erstes Ausführungsbeispiel des Mikro-MSANs 220. Das Gehäuse 224 des Mikro-MSANs 220 ist ein gegossenes längliches Kunststoffgehäuse 224 mit integrierter Technik, nämlich dem Mikrocontroller, welches im Wesentlichen eine quaderförmige Form aufweist. Von der quaderförmige Form des Gehäuses 224 wird an den Stirnflächen mit der geringsten Flächengröße zugunsten der beiden Schnittstellen 220a, 220b abgewichen, die auf jeweils entgegengesetzten Seiten an diesen beiden Stirnflächen des Gehäuses 224 angeordnet sind. Zumindest eine der beiden Stirnflächen wird so angepasst, dass dort Kontaktflächen ausgebildet sind und dass der Mikro-MSAN 220 in den Schaltpunkt einsteckbar ist. Bevorzugt betrifft dies die Stirnfläche an welcher die Schnittstelle 220a angeordnet ist. In Fig. 5 sind die entsprechenden Kontakte 221a der Schnittstelle 220a schematisch gezeigt. Das Gehäuse 224 ist so gebaut, dass auf benachbarte Schaltpunkte jeweils ein Mikro-MSAN 220 aufgesteckt werden kann, ohne dass sich deren Raumvolumen überschneidet. Es sind auch Bauformen möglich, die für DSL-Bonding die Verschaltung mehrerer Anschlüsse erlauben. Die gegossene Bauform des Mikro-MSANs 220 ist vorteilhaft, da hierdurch Manipulationen verhindert werden. Ein Manipulationsversuch des Mikro-MSANs 220 geht automatisch mit dessen Zerstörung einher.

Nachfolgend werden die Bauteile beschrieben, welche in dem Mikro-MSAN 220 aufgenommen sind. Diese Bauteile können alle in einem einzigen Mikrocontroller realisiert werden. Der Mikrocontroller stellt zumindest die folgenden Funktionalitäten bereit: Eine pure Modemfunktionalität, eine Transformation Breitband xDSL auf Glasfaser, keine komplexen Funktionen (z. B. Queuing etc), reines L2 Ethernet, optische Terminierung auf Switch, wenig Sendeleistung (da nur optischer Transport bis zum GPON-Splitter/Verstärker). Zusammenfassend hat der Mikrocontroller also eine Modemfunktionalität, konvertiert die optischen Signale in elektrische Signale eines bestimmten DSL-Standards und umgekehrt und steuert die Stromversorgung.

Zur Übersichtlichkeit werden diese Bauteile bzw. Funktionalitäten allerdings getrennt beschrieben. Innerhalb des Mikro-MSANs 220 ist eine Verbindung 228 zwischen den Kontakten 221a und einem Modul 230 geschaffen, das die Stromversorgung des Mikro-MSANs 220 steuert. Über die Verbindung 228 werden ebenfalls die elektrische Energie der Fernspeisung als auch die DSL-Signale der jeweiligen Glasfaser Leitung 104 übertragen. Alternativ kann für die DSL-Signale eine weitere, nicht gezeigte, Verbindung bereitgestellt sein, die direkt in die zentrale Baugruppe 240 einläuft. Bei der zentralen Baugruppe 240 handelt sich um einen Bus, der die Signale verteilt und die einzelnen Module steuert. Zwischen dem Modul 230 und der zentralen Baugruppe 240 ist eine weitere Verbindung realisiert, wodurch die zentrale Baugruppe 240 mit Strom und den DSL-Signalen versorgt wird. An die zentrale Baugruppe 240 ist jeweils ein Sicherheitsmittel 244 (auch als Identifikationsmittel 244 bezeichnet), ein DSL-Access-Multiplexer 246 und eine Glasfaserterminierung 248 angeschlossen.

Das Sicherheitsmittel 244 ist vergleichbar mit einer SIM-Karte, dass eine sichere Identifizierung durch den Netzbetreiber im Rahmen des Inbetriebnahmeprozesses erlaubt. Das Sicherheitsmittel 244 erhält eine eindeutige Geräte-ID, wobei diese Geräte-ID als eine eindeutige Kennzeichnung beispielsweise als Bar- oder QR-Code auf dem Gehäuse 224 ausgeführt ist. Die automatische Inbetriebnahme bei Anliegen einer Stromversorgung erfolgt, indem der sich der Mikro-MSAN 220 mithilfe des Sicherheitsmittels 244 an einer Management-Plattform registriert und von dort über die Glasfaserleitung 104 Konfigurationseinstellungen bekommt. Als zusätzlichen Schutz übermittelt der Techniker die elektronisch erfasste Geräte-ID an das Management System und dokumentiert den zugehörigen Schaltpunkt. In das Sicherheitsmittel 244 ist eine Funktionalität integriert, die sicherstellt, dass eine erneute Autorisierung mithilfe des Sicherheitsmittels 244 erfolgt, wenn der Mikro-MSAN 220 galvanisch von der Teilnehmeranschlussleitung 140 oder von der Glasfaserleitung 104 getrennt wurde. In dem Sicherheitsmittel 244 ist ein geheimer Schlüssel, zum Beispiel Text mit 256 Zeichen, hinterlegt, der bei der Herstellung sicher in einem Mikrochip in der Hardware verwahrt wird. Dieser geheime Schlüssel kann nicht direkt ausgelesen werden. Im Chip ist noch ein Verschlüsselungsverfahren (zum Beispiel A5/A8) eingebracht. Der Hersteller teilt den geheimen Schlüssel dem Netzbetreiber mit. Zur Autorisierung werden lediglich Zufallswerte vom Netzbetreiber an den Mikro-MSAN 220 gesendet. Der Chip nimmt den Zufallswert und erzeugt im Chip mit dem Verschlüsselungsverfahren und dem geheimen Schlüssel einen öffentlichen Einmal-Schlüssel. Der Netzbetreiber nimmt ebenfalls den Zufallswert und erzeugt den öffentlichen Einmal-Schlüssel. Stimmen die Werte überein, ist die Vertraulichkeit des Mikro-MSAN 220 gewährleistet. Damit ist sichergestellt, dass ein Mikro-MSAN nicht einfach ersetzt bzw. ausgetauscht werden kann. Gleichzeitig ist damit der Mikro-MSAN 220 in dem Inventar eindeutig hinterlegt und kann dem Teilnehmeranschluss zugeordnet werden. Ein Umstecken würde registriert werden.

Der DSL-Access-Multiplexer 246 leitet die Signale eines bestimmten DSL-Standards, für den der Mikro-MSAN 220 ausgelegt ist, als elektrische Signale 250 mittels der Kontakte 221b der Schnittstelle 220b an die kupferbasierten Teilnehmeranschlussleitungen 140b weiter.

Die Glasfaserterminierung 248 leitet die Signale eines bestimmten DSL-Standards, für den der Mikro-MSAN 220 ausgelegt ist, als optische Signale 251 mittels der Kontakte 221b der Schnittstelle 220b an die Glasfaser-Teilnehmeranschlussleitung 140b weiter.

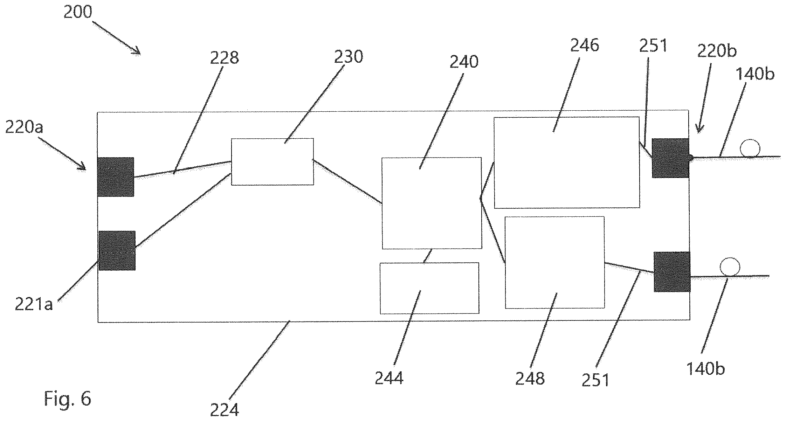

Im Unterschied zu Fig. 5, versorgt der DSL-Access-Multiplexer 246 in Fig. 6 ebenfalls eine Glasfaser-Teilnehmeranschlussleitung 140b mit den entsprechenden DSL-Signalen. Vom Prinzip steckt dahinter die Idee, dass man bei der "physikalischen" Wahl der Teilnehmeranschlussleitung nicht zwingend auf das physikalische Medium Kupfer begrenzt ist.

## Patentansprüche

1. System zur Bereitstellung von Verbindungen, die auf einem DSL-Standard basieren, umfassend
eine Eingangsleitung (104) aus Glasfaser über die optische Signale gesendet werden,
eine Mehrzahl von drahtgebundenen Teilnehmeranschlussleitungen (140) zur Übertragung von elektrischen Signalen, die jeweils einem Nutzer zugeordnet sind,
ein Multi-Service-Access-Multiplexer, MSAN (120), in den einerseits die Eingangsleitung (104) aus Glasfaser und andererseits die Teilnehmeranschlussleitungen (140) einlaufen, wobei der MSAN (120) eine Transformation zwischen den elektrischen und optischen Signalen eines bestimmten DSL-Standards ausführt,
**gekennzeichnet durch**
einen Splitter (160), der die Eingangsleitung (104) in eine Mehrzahl gesplitteter-Eingangsfasern aufteilt, wobei
jeweils ein für einen bestimmte DSL-Standard vorgesehener individueller Mikro-MSAN (220) zwischen eine einzelne gesplittete-Eingangsfaser (104) und eine einzelne Teilnehmeranschlussleitung (140) geschaltet ist, wobei der Mikro-MSAN (220) einen Mikrocontroller aufweist, der eine Konvertierung zwischen den elektrischen und den optischen Signalen bewerkstelligt.

2. System nach Anspruch 1, **gekennzeichnet durch** ein Koppelfeld (142), wobei in eine Seite des Koppelfeldes (142) die Teilnehmeranschlussleitungen (140) einlaufen und auf der anderen Seite des Koppelfeldes (142) ein Schaltpunkt ausbildet ist, der eine Kontaktfläche zu den Teilnehmeranschlussleitungen (140) bereitstellt.

3. System nach Anspruch 2, **dadurch gekennzeichnet, dass** der Mikro-MSAN (220) in den vom Nutzer aus nächstgelegenen Schaltpunkt einsteckbar ist.

4. System nach einem der Ansprüche 2 bis 3, **dadurch gekennzeichnet, dass** auf benachbarte Schaltpunkte jeweils einer der Mikro-MSANs (220) aufsteckbar ist, wobei die Mikro-MSANs (220) so kompakt gebaut sind, dass sich deren Raumvolumen nicht überschneidet.

5. System nach einem der Ansprüche 2 bis 4, **dadurch gekennzeichnet, dass** mehrere direkt nebeneinander liegende Schaltpunkte, die einem einzigen Teilnehmeranschluss (154) zugeordnet sind, durch einen Bündelungs-Mikro-MSAN bedienbar und bündelbar sind.

6. Mikro-MSAN zur Verwendung in einem System nach Anspruch 1 aufweisend
eine erste Schnittstelle (220a) zur Kopplung mit einer einzelnen gesplitteten-Eingangsfaser (104),
eine zweite Schnittstelle (220b) zur Kopplung mit einer einzelnen Teilnehmeranschlussleitung (140),
einen Mikrocontroller, der eine Konvertierung zwischen den elektrischen und/oder den optischen Signalen, die jeweils einem Nutzer zugeordnet sind, bewerkstelligt.

7. Mikro-MSAN nach Anspruch 6, **dadurch gekennzeichnet, dass** eine der Schnittstellen (220a, 220b) als ein Stecker ausgebildet ist, der unmittelbar auf einen Schaltpunkt eines Koppelfeldes (142, 143) einsteckbar ist.

8. Mikro-MSAN nach Anspruch 6, **dadurch gekennzeichnet, dass** der Mikrocontroller zur elektrischen Fernspeisung des Mikro-MSANs (220) verwendet wird.

9. Mikro-MSAN nach Anspruch 6, **dadurch gekennzeichnet, dass** der Mikro-MSAN (220) ein Sicherheitsmittel (244) aufweist, welches Signale mit einer Vermittlungsstelle (102) über die Eingangsleitung (104) austauscht.

10. Mikro-MSAN nach Anspruch 6, **dadurch gekennzeichnet, dass** der Mikro-MSAN (220) in einem Multifunktionsgehäuse (108) und/oder einem Kabelverzweiger (150) verwendet wird.

## Claims

1. A system for providing connections that are based on a DSL standard, comprising:
a fiber optic input line (104), via which optical signals are sent,
a multiplicity of wired subscriber lines (140) for the transmission of electrical signals, which are each assigned to a user,
a multi-service access multiplexer, MSAN (120), into which the fiber optic input line (104) and the subscriber lines (140) feed, wherein the MSAN (120) executes a transformation between the electrical and optical signals of a specific DSL standard,
**characterized by**
a splitter (160), which divides the input line (104) into a multiplicity of split input fibers, wherein
in each case an individual micro-MSAN (220) intended for a specific DSL standard is connected between a single split input fiber (104) and a single subscriber line (140), wherein the micro-MSAN (220) has a micro controller, which effects a conversion between the electrical and the optical signals.

2. The system according to Claim 1, **characterized by** a coupling section (142), wherein the subscriber lines (140) feed into one side of the coupling section (142) and a switching point, which provides a contact surface to the subscriber lines (140), is formed on the other side of the coupling section (142).

3. The system according to Claim 2, **characterized in that** the micro-MSAN (220) can be plugged into the switching point closest to the user.

4. The system according to any one of Claims 2 to 3, **characterized in that** in each case one of the micro-MSANs (220) can be attached to adjacent switching points, wherein the micro-MSANs (220) are sufficiently compact such that the spatial volumes thereof do not intersect.

5. The system according to any one of Claims 2 to 4, **characterized in that** multiple switching points located directly adjacently to one another, which are assigned to a single subscriber connection (154), can be operated and bundled by a bundling micro-MSAN.

6. A micro-MSAN for use in a system according to Claim 1, having
a first interface (220a) for coupling to a single split input fiber (104),
a second interface (220b) for coupling to a single subscriber line (140),
a microcontroller, which effects a conversion between the electrical and/or the optical signals, which in each case are assigned to one user.

7. The micro-MSAN according to Claim 6, **characterized in that** one of the interfaces (220a, 220b) is configured as a plug, which can be plugged directly onto a switching point of a coupling section (142, 143).

8. The micro-MSAN according to Claim 6, **characterized in that** the microcontroller is used for remotely supplying the micro-MSAN (220) with electric power.

9. The micro-MSAN according to Claim 6, **characterized in that** the micro-MSAN (220) has a security means (244), which exchanges signals with an exchange (102) via the input line (104).

10. The micro-MSAN according to Claim 6, **characterized in that** the micro-MSAN (220) is used in a multifunctional housing (108) and/or in a cable branch box (150).

## Revendications

1. Système complet pour fournir des connexions basées sur une norme DSL, comprenant
une ligne d'entrée (104) en fibre de verre via laquelle des signaux optiques sont envoyés,
une pluralité de lignes de connexion d'abonné filaires (140) pour la transmission de signaux électriques qui sont respectivement affectés à un utilisateur,
un multiplexeur d'accès multiservices, MSAN (120), dans lequel d'une part la ligne d'entrée (104) en fibre de verre et d'autre part les lignes d'abonné (140) arrivent, dans lequel le MSAN (120) effectue une transformation entre les signaux électriques et optiques d'une certaine norme DSL,
**caractérisé par**
un séparateur (160), qui divise la ligne d'entrée (104) en une pluralité de fibres d'entrée divisées, dans lequel
un micro-MSAN individuel (220) prévu respectivement pour une norme DSL spécifique est connecté entre une seule fibre d'entrée divisée (104) et une seule ligne d'abonné (140), dans lequel le micro-MSAN (220) présente un microcontrôleur, qui effectue une conversion entre les signaux électriques et optiques.

2. Système selon la revendication 1, **caractérisé par** une matrice de commutation (142), dans lequel dans un côté de la matrice de commutation (142) arrivent des lignes de connexion d'abonné (140) et de l'autre côté de la matrice de commutation (142), un point de commutation est formé qui fournit une surface de contact aux lignes de connexion d'abonné (140).

3. Système selon la revendication 2, **caractérisé en ce que** le micro-MSAN (220) peut être inséré dans le point de commutation le plus proche de l'utilisateur.

4. Système selon une des revendications 2 à 3, **caractérisé en ce qu'**un des micro-MSAN (220) peut être enfiché sur des points de commutation adjacents, dans lequel les micro-MSAN (220) ont une structure si compacte que leur volume spatial ne se chevauche pas.

5. Système selon une des revendications 2 à 4, **caractérisé en ce qu'**une pluralité de points de commutation se trouvant directement les uns à côté des autres, qui sont affectés à une seule ligne d'abonné (154), peuvent être exploités et regroupés par un groupement micro-MSAN.

6. Micro-MSAN destiné à être utilisé dans un système selon la revendication 1, comprenant
une première interface (220a) pour le couplage à une seule fibre d'entrée divisée (104),
une seconde interface (220b) pour le couplage à une seule ligne de connexion d'abonné (140),
un microcontrôleur qui convertit les signaux électriques et/ou optiques, qui sont respectivement attribués à un utilisateur.

7. Micro-MSAN selon la revendication 6, **caractérisé en ce que** une des interfaces (220a, 220b) est conçue comme une fiche qui peut être enfichée directement dans un point de commutation d'une matrice de commutation (142, 143) .

8. Micro-MSAN selon la revendication 6, **caractérisé en ce que** le microcontrôleur est utilisé pour l'alimentation électrique à distance du micro-MSAN (220).

9. Micro-MSAN selon la revendication 6, **caractérisé en ce que** le micro-MSAN (220) présente un moyen de sécurité (244), qui échange des signaux avec un centre de commutation (102) via la ligne d'entrée (104).

10. Micro-MSAN selon la revendication 6, **caractérisé en ce que** le micro-MSAN (220) est utilisé dans un boîtier multifonctionnel (108) et/ou un répartiteur de câbles (150) .
